**Europäisches Patentamt**

**European Patent Office**

**Office européen des brevets**

(19)

(11) **EP 1 514 635 A1**

(12) **EUROPEAN PATENT APPLICATION**
published in accordance with Art. 158(3) EPC

(43) Date of publication:
**16.03.2005 Bulletin 2005/11**

(51) Int Cl.7: **B23K 26/40**, C03C 23/00

(21) Application number: **03755269.2**

(22) Date of filing: **15.05.2003**

(86) International application number:
**PCT/JP2003/006040**

(87) International publication number:
**WO 2003/099508 (04.12.2003 Gazette 2003/49)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **24.05.2002 JP 2002150541**

(71) Applicants:
• **Riken**
**Wako-shi, Saitama 351-0198 (JP)**
• **Hoya Photonics Corporation**
**Tokyo 108-0014 (JP)**

(72) Inventors:
• **SUGIOKA, Koji**
**Wako-shi, Saitama 351-0198 (JP)**

• **CHENG, Ya**
**Wako-shi, Saitama 351-0198 (JP)**
• **MIDORIKAWA, Katsumi**
**Wako-shi, Saitama 351-0198 (JP)**
• **SHIHOYAMA, Kazuhiko,**
**HOYA PHOTONICS CORPORATION**
**Toda-shi, Saitama 335-0027 (JP)**

(74) Representative: **Schuster, Thomas, Dipl.-Phys.**
**Grünecker, Kinkeldey, Stockmair & Schwanhäusser**
**Anwaltssozietät**
**Maximilianstrasse 58**
**80538 München (DE)**

(54) **METHOD AND DEVICE FOR PROCESSING INSIDE OF TRANSPARENT MATERIAL**

(57)     A shape with a substantially perfect sphere, or a cross-sectional shape with a substantially perfect circle in a direction parallel to an advance direction of a femtosecond laser light beam, is obtained as a processed shape such as a modified shape of a worked shape. Rays of femtosecond laser light (L1, L2) are entered into lenses (16, 20), respectively, and the rays of laser light are focused inside a transparent material (100) by the lenses such that each of the optical axes of the rays has a predetermined angle. The light focus positions of the rays of femtosecond laser light are superposed inside the transparent material and the inside of the material is processed.

FIG. 2

EP 1 514 635 A1

**Description**

Technical Field

The present invention relates to a method and a device for processing the inside of a transparent material, more specifically to a method and a device for processing the inside of a transparent material, which is preferably used in performing processing such as modification and working of the inside of the transparent material with respect to laser beam of source of femtosecond laser beam having the pulse width of a $10^{-13}$ second order.

Background Art

Conventionally, there has been known source of femtosecond laser beam, which has the pulse width of a $10^{-13}$ second order as a source of laser beam of a sub-picosecond or less.

When femtosecond laser beam being laser beam that is emitted from such femtosecond laser, which is a femtosecond laser having the pulse width of about 100 to 150 femtoseconds ("laser beam that is emitted from femtosecond laser" shall be referred to as "femtosecond laser beam" in this specification), for example, is focused on the inside of a transparent material with respect to the femtosecond laser beam (a transparent material with respect to predetermined femtosecond laser beam shall be appropriately referred to simply as a "transparent material" in this specification) via a lens, there is known a phenomenon that multiphoton absorption occurs only at a focal spot being a beam focus position and processing such as the modification or the working of the focal spot inside the transparent material can be performed.

In recent years, report has been made that refraction index is changed, crystallization is performed, or a micro-void is generated inside a glass material that is transparent with respect to the femtosecond laser beam, with the use of such phenomenon. Furthermore, report has been made regarding the creation of an optical waveguide, a three-dimensional memory, a photonic crystal, or a micro-channel.

Meanwhile, regarding the structure of the above-described micro-void or the like that has been created using the above-described phenomenon, when observation was made for the three-dimensional shape of a region at the focal spot of the femtosecond laser beam, to which the processing such as the modification and the working was performed, the three-dimensional shape had a rotational elliptical shape of a lengthwise rugbyball shape extending in the advance direction of femtosecond laser beam. Then, it is considered that the reason why the three-dimensional shape of the processed region became the rotational elliptical shape of a lengthwise rugby ball shape extending in the advance direction of femtosecond laser beam is because a longitudinal direction of the femtosecond laser beam at the focal spot of the femtosecond laser beam, which is the spatial intensity distribution of a direction parallel to the advance direction of femtosecond laser beam, has the intensity distribution of the lengthwise rotational elliptical shape extending in the advance direction of femtosecond laser beam.

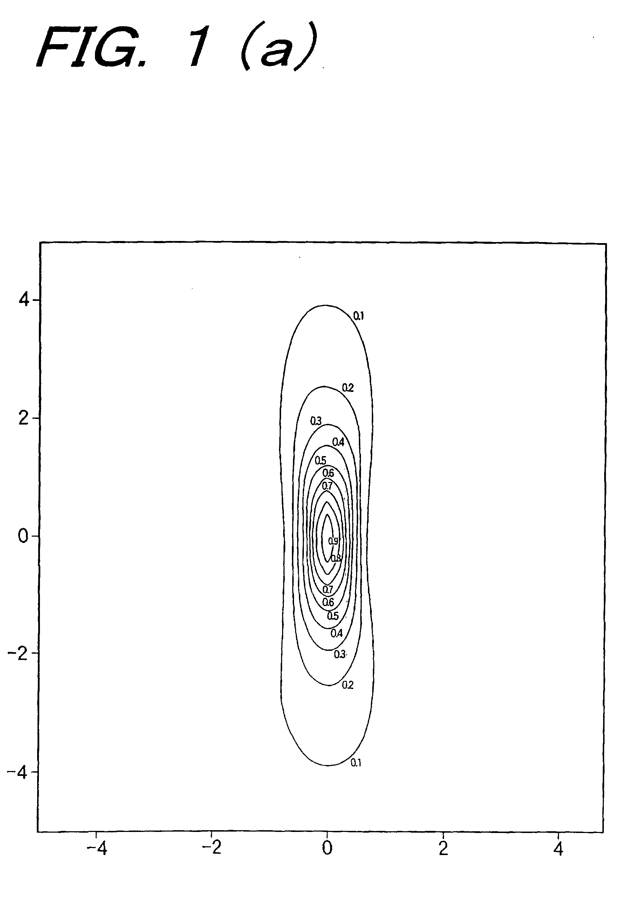

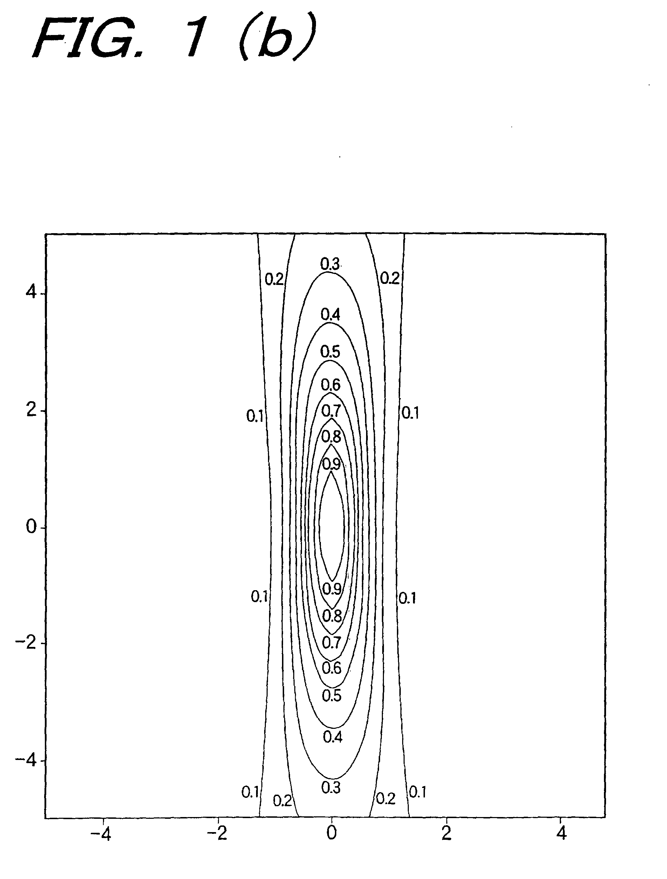

Specifically, according to the calculation result of the inventors of this application, when the femtosecond laser beam is focused using an objective lens having the numerical aperture (NA) of 0.5, for example, the spatial intensity distribution of the direction parallel to the advance direction of femtosecond laser beam at the focal spot should be the intensity distribution of the lengthwise elliptical shape extending in the advance direction of femtosecond laser beam, as shown in Fig. 1(a). Similarly, when the femtosecond laser beam is focused using an objective lens having the numerical aperture of 1/3, for example, the spatial intensity distribution of the direction parallel to the advance direction of femtosecond laser beam at the focal spot should be the intensity distribution of the lengthwise elliptical shape extending in the advance direction of femtosecond laser beam, as shown in Fig. 1(b).

It is to be noted that a calculation method shown in "The beam focus calculation of Gaussian beam when using a lens having focal distance f" shown below was used as the calculation of the spatial intensity distribution shown in Figs. 1(a) (b).

"The beam focus calculation of Gaussian beam when using a lens having focal distance f"

1. Gaussian beam

$$U_{00}(x,y,z) = \sqrt{\frac{2}{\pi}}\frac{1}{\omega}e^{-i\varphi}\exp\left\{-\frac{[x^2+y^2]}{\omega^2}\right\}\exp\left\{\frac{ik[x^2+y^2]}{2R}\right\}$$

2. Relational expressions in a Gaussian optical system

$$\omega^2(z) = \omega_0^2(1 + z^2 / Z_0^2) \qquad \omega_0^2 = 2Z_0 / k$$

$$R = (z^2 + Z_0^2)/z \qquad \tan\varphi = z/Z_0$$

3. Gaussian beam that is transferred by a thin lens
Herein, wavefront becomes as follows by the lens.

$$T(x, y) = \exp(-ik(x^2 + y^2)/ 2f)$$

and

$$\frac{ik(x^2 + y^2)}{2R} = \frac{ik(x^2 + y^2)}{2R} - \frac{ik(x^2 + y^2)}{2f}$$

As a result, the following expression is obtained.
$R = f$ if $R' \to \infty$

4. Transformed relational expression
Based on the above-described relational expressions, the wavefront immediately after the lens is as follows.

$$A(x, y, z_L) = \sqrt{\frac{2}{\pi}} \frac{1}{\omega} e^{-i\varphi} \exp\left\{ -\frac{\left[x^2 + y^2\right]}{\omega^2} \right\} \exp\left\{ \frac{-ik\left[x^2 + y^2\right]}{2f} \right\}$$

To find a new waist dimension $\omega_0$ and a parameter $Z_0$, the following relational expressions are used.

$$\omega^2 = \omega_0^2(1 + z_L^2/Z_0^2)$$

and

$$R = f = (z_L^2 + Z_0^2)/z_L$$

By solving the expressions, the followings are obtained.

$$\omega_0^2 = 2Z_0/k = \frac{\omega^2}{1 + \dfrac{k^2\omega^4}{4f^2}}$$

and

$$z_L^2 = Z_0^2 (\omega^2 / \omega_0^2 - 1)$$

The expression is further rewritten into the following.

$$z_L = f - \frac{Z_0}{\sqrt{\omega^2/\omega_0^2 - 1}}$$

If $\dfrac{\omega}{\omega_0} \gg 1$, $z_L \approx f$ always holds.

As a result, the final Gaussian beam after the lens having the focal distance *f* becomes as follows.

$$A(x, y, z) = \sqrt{\frac{2}{\pi}} \frac{1}{\omega} e^{-i\varphi} \exp\left\{ -\frac{[x^2 + y^2]}{\omega^2} \right\} \exp\left\{ \frac{-ik[x^2 + y^2]}{2[(z_L - z)^2 + Z_0^2]/(z_L - z)} \right\}$$

Herein, the rear surface of the lens is an origin, and the following holds at the center of beam.

$$\omega^2(z) = \omega_0^2(1 + (z_L - z)^2 / Z_0^2) \text{ and } \tan \varphi = (z_L - z)/Z_0$$

By using these relational expressions, the propagation of the Gaussian beam after the lens can be calculated.

5. Simulation parameter

Parameter: $k = 2\pi$, wavelength: $\lambda = 1um$, beam waist: $\omega = 3000um$, focal distance of lens: variable

Further, when $\omega \rangle\rangle \omega_0$, $\omega_0 \approx \frac{f}{\omega} \frac{\lambda}{\pi}$ and $z_L \approx f$ hold. Consequently, the origin is changed from the rear surface to the focal spot. This greatly simplifies calculation.

As a result, the processed shape such as a modified shape and a worked shape inside the transparent material became the rotational elliptical shape of a lengthwise rugby ball shape extending in the advance direction of femtosecond laser beam by suffering from the spatial intensity distribution in the direction parallel to the advance direction of femtosecond laser beam at the focal spot inside the transparent material.

However, there existed a problem that it was not desirable that the processed shape such as a modified shape and a worked shape inside the transparent material became the rotational elliptical shape of a lengthwise rugby ball shape extending in the advance direction of femtosecond laser beam when industrial creation and usage of micro-void or micro-channel are taken in consideration. Specifically, as the processed shape such as a modified shape and a worked shape inside the transparent material, the processed shape of a substantially perfect sphere was required in many cases, in other words, a cross-sectional shape in the direction parallel to the advance direction of femtosecond laser beam being a substantially perfect circle was required.

Herein, in order to obtain a substantially perfect sphere as the processed shape such as a modified shape and a worked shape inside the transparent material, in other words, to obtain a shape whose cross-sectional shape in the direction parallel to the advance direction of femtosecond laser beam is a substantially perfect circle, the spatial intensity distribution at the focal spot inside the transparent material, in the direction parallel to the advance direction of femtosecond laser beam should be the shape of a substantially perfect circle.

Generally, as a method of obtaining a processed shape of a substantially perfect sphere as the processed shape such as a modified shape and a worked shape inside the transparent material while obtaining the spatial intensity distribution of a substantially perfect circle in the direction parallel to the advance direction of femtosecond laser beam, in other words, to obtain a shape whose cross-sectional shape in the direction parallel to the advance direction of femtosecond laser beam is a substantially perfect circle, the use of an objective lens having a large numerical aperture is considered.

Certainly, when the femtosecond laser beam is focused on the inside of the transparent material using an objective lens having the numerical aperture of 1 or more and the processing such as the modification and working inside the transparent material is performed, there is known that a shape substantially perfect sphere, in other words, a shape whose cross-sectional shape in the direction parallel to the advance direction of femtosecond laser beam is the shape of substantially perfect circle is obtained as the processed shape such as a modified shape and a worked shape on the focal spot (Hiroaki MISAWA et al., Proc. SPIE Vol.4088, p29-32).

However, when the femtosecond laser beam is focused on the inside of the transparent material using the objective lens having the numerical aperture of 1 or more, a working distance (the working distance is the distance between the objective lens and a sample that is the transparent material to be modified or worked) becomes several hundred μm or less (the working distance is 200 to 300μm when the femtosecond laser beam is focused on the inside of the transparent material using an objective lens having the numerical aperture of 1), so that a problem was pointed out that the processing such as the modification and the working with respect to a region at a deep position inside the transparent material was impossible.

It is to be noted that the numerical aperture of lens by which the working distance of several mm to about 1cm is secured is about 0.3 to 0.5.

The present invention has been created in view of the above-described problems that prior art has, and it is an object of the present invention to provide a method and a device for processing the inside of a transparent material, which is capable of obtaining a processed shape of substantially perfect sphere as the processed shape such as a modified shape or a worked shape on a beam focus position, in other words, a cross-sectional shape in a direction parallel to the advance direction of femtosecond laser beam is a substantially perfect circle, even if the femtosecond laser beam is focused on the inside of the transparent material using a condenser lens of a relatively small numerical aperture, by which the working distance of several mm or more can secured.

Disclosure of the Invention

To achieve the above-described object, the present invention is a method in which a plurality of femtosecond laser beams are severally entered into lenses, the lenses focus the plurality of femtosecond laser beams on the inside of a transparent material such that each optical axis has a predetermined angle, the beam focus positions of the plurality of femtosecond laser beams are superposed on the inside of the transparent material, and the inside of the transparent material is processed by the operation of the plurality of femtosecond laser beams that are focused on the superposed beam focus position.

Further, the present invention is a method in which the first femtosecond laser beam is entered into the first lens to focus the first femtosecond laser beam on the inside of the transparent material by the first lens, the second femtosecond laser beam is entered into the second lens to focus the second femtosecond laser beam on the inside of the transparent material by the second lens such that the beam has a predetermined angle with respect to the first femtosecond laser beam that is focused on the inside of the transparent material, the beam focus position of the first femtosecond laser beam and the beam focus position of the second femtosecond laser beam are superposed on the inside of the transparent material, and the inside of the transparent material is processed by the operation of the first femtosecond laser beam and the second femtosecond laser beam which are focused on the superposed beam focus position.

Furthermore, the present invention is a method in which the predetermined angle is approximately 90 degrees.

In addition, the present invention is a device having a plurality of lenses that severally focus a plurality of femtosecond laser beams on the inside of a transparent material, in which the beam focus positions of the plurality of femtosecond laser beams are superposed on the inside of the transparent material with predetermined angles, and the inside of the transparent material is processed by the operation of the plurality of femtosecond laser beams that are focused on the superposed beam focus position.

Further, the present invention is a device having the first lens for focusing the first femtosecond laser beam on the inside of a transparent material and the second lens for focusing the second femtosecond laser beam on the inside of the transparent material, in which the beam focus position of the first femtosecond laser beam and the beam focus position of the second femtosecond laser beam are superposed on the inside of the transparent material with a predetermined angle, and the inside of the transparent material is processed by the operation of the first femtosecond laser beam and the second femtosecond laser beam which are focused on the superposed beam focus position.

Still further, the present invention is a device having moving means for relatively moving the superposed beam focus positions of the first femtosecond laser beam and the second femtosecond laser beam which are focused on the inside of the transparent material, with respect to the transparent material.

Furthermore, the present invention is a device in which the predetermined angle is approximately 90 degrees.

Therefore, according to the above-described present invention, the spatial intensity distribution in the direction parallel to the advance direction of femtosecond laser beam at the beam focus position on the inside of the transparent material becomes a substantially perfect circle. Consequently, as the processed shape such as a modified shape and a worked shape inside the transparent material, a substantially perfect sphere, in other words, the shape whose cross-sectional shape in the direction parallel to the advance direction of femtosecond laser beam is a substantially perfect circle can be obtained.

Specifically, by irradiating two femtosecond laser beams so as to have a predetermined angle such as approximately 90 degrees, for example, to superpose the beam focus positions as shown in the above-described present invention, the spatial intensity distribution of an elliptical shape in a direction parallel to the advance direction of the beam on the beam focus position of each femtosecond laser beam is superposed, the spatial intensity distribution in the direction parallel to the advance direction of femtosecond laser beam at the beam focus position on the inside of the transparent material becomes a substantially perfect circle. Thus, as the processed shape such as a modified shape and a worked shape inside the transparent material, a substantially perfect sphere, in other words, the shape whose cross-sectional shape in the direction parallel to the advance direction of femtosecond laser beam is a substantially perfect circle can be obtained.

Brief Description of the Drawings

Fig. 1(a) and Fig. 1(b) are simulation views showing a calculation result based on prior art. Fig. 1(a) is the simulation view showing the calculation result of the spatial intensity distribution in the direction parallel to the advance direction of femtosecond laser beam on the focal spot when the femtosecond laser beam is focused by using an objective lens having the numerical aperture of 0.5. Fig. 1(b) is the simulation view showing the calculation result of the spatial intensity distribution in the direction parallel to the advance direction of femtosecond laser beam on the focal spot when the femtosecond laser beam is focused by using an objective lens having the numerical aperture of 1/3.

It is to be noted that the intensity becomes higher toward the center of the simulation view of Fig. 1(a) and Fig. 1(b).

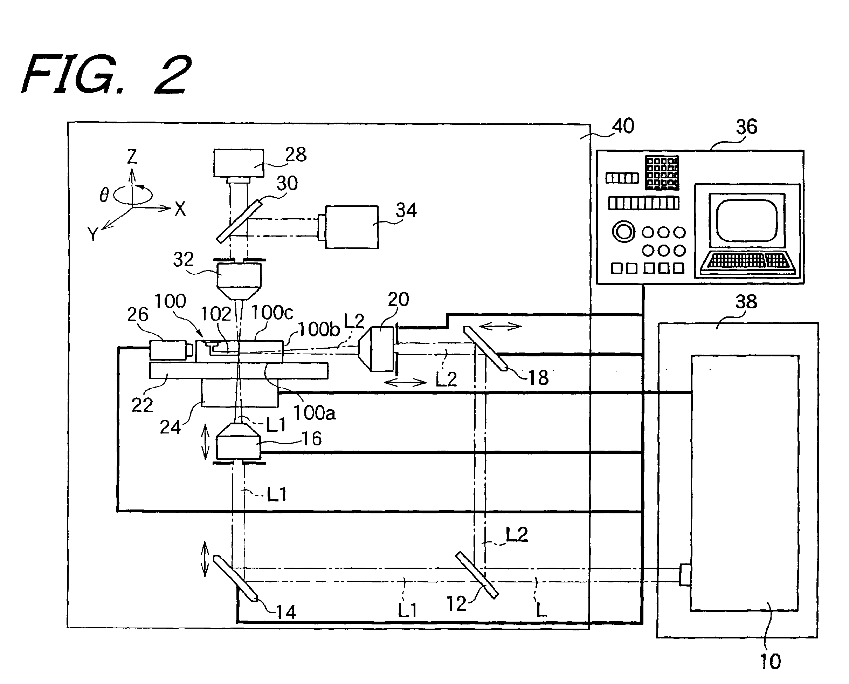

Fig. 2 is a conceptual constitution exemplary view of a processing device for the inside of the transparent material.

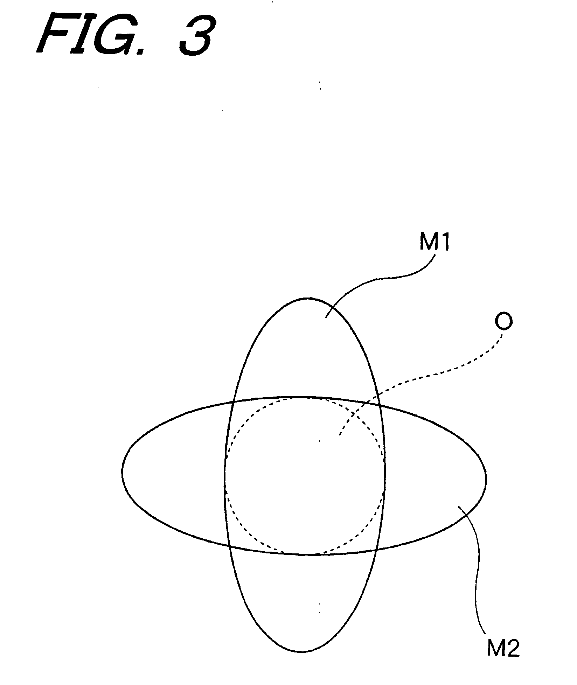

Fig. 3 is an exemplary view showing the state where spatial intensity distribution M1 of an elliptical shape in a direction parallel to the advance direction of a beam at the beam focus position of the first femtosecond laser beam L1 and spatial intensity distribution M2 of an elliptical shape in a direction parallel to the advance direction of a beam at the beam focus position of the second femtosecond laser beam L2 are superposed.

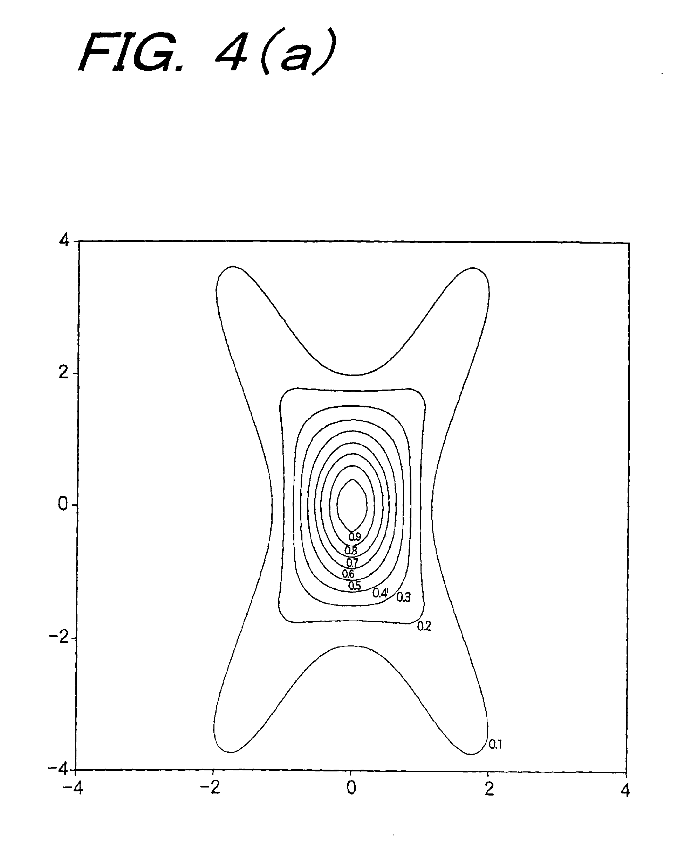

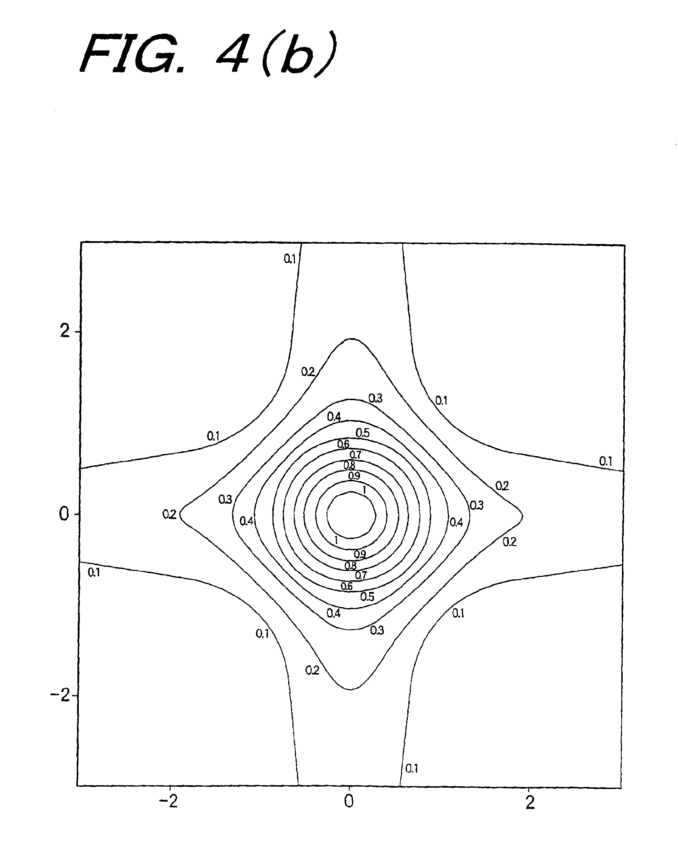

Fig. 4(a) and Fig. 4(b) are simulation views showing a calculation result based on the processing device for the inside of the transparent material according to the present invention. Fig. 4(a) is the simulation view showing the calculation result of the spatial intensity distribution in the direction parallel to the advance direction of a beam at a beam focus position where the beam focus position of the first femtosecond laser beam L1 and the beam focus position of the second femtosecond laser beam L2 are superposed when an angle at which the first femtosecond laser beam L1 and the second femtosecond laser beam L2 cross is 60 degrees in the case where the objective lenses having the numerical aperture of 1/3 are used as the objective lens for irradiating the first femtosecond laser beam and the objective lens for irradiating the second femtosecond laser beam. Fig. 4 (b) is the simulation view showing the calculation result of the spatial intensity distribution in the direction parallel to the advance direction of a beam at a beam focus position where the beam focus position of the first femtosecond laser beam L1 and the beam focus position of the second femtosecond laser beam L2 are superposed when an angle at which the first femtosecond laser beam L1 and the second femtosecond laser beam L2 cross is 90 degrees in the case where the objective lenses having the numerical aperture of 1/3 are used as the objective lens for irradiating the first femtosecond laser beam and the objective lens for irradiating the second femtosecond laser beam.

It is to be noted that the intensity becomes higher toward the center of the simulation view of Fig. 4(a) and Fig. 4(b).

Explanation of Reference Numerals

| 10 | Femtosecond laser |
|----|----|
| 12 | Half mirror |
| 14 | First mirror |
| 16 | Objective lens for irradiating first femtosecond laser beam |
| 18 | Second mirror |
| 20 | Objective lens for irradiating second femtosecond laser beam |
| 22 | Sample mounting table |
| 24 | High accuracy x-y-z-θ stage |
| 26 | Fluorescence monitor |
| 28 | Illumination unit |
| 30 | Half mirror |
| 32 | Objective lens |
| 34 | CCD camera for observation |
| 36 | NC control system |
| 38 | Vibration isolating deck |
| 40 | Vibration isolating deck |
| 100 | Sample |
| 100a | Bottom surface |
| 100b | Side surface |
| 100c | Top surface |
| 102 | Micro-channel |
| L | Femtosecond laser beam |
| L1 | First femtosecond laser beam |
| L2 | Second femtosecond laser beam |

M1     Spatial intensity distribution of first femtosecond laser beam
M2     Spatial intensity distribution of second femtosecond laser beam

Best Mode for Carrying Out the Invention

In the following, description will be made for one example of the embodiment of the method and the device for processing the inside of a transparent material according to the present invention based on the accompanying drawings.

Fig. 2 shows the conceptual constitution exemplary view of the processing device for the inside of the transparent material according to the present invention. In Fig. 2, as processing inside a sample 100, which is made of photosensitive glass as the transparent material, while the processing device of the inside of the transparent material according to the present invention is used, a case is shown for performing processing of a region that becomes a micro-channel 102 in order to form the micro-channel 102 inside the sample 100. It is to be noted that Forturan glass can be used as the photosensitive glass, for example.

The processing device for the inside of the transparent material shown in Fig. 2 has a femtosecond laser 10 that irradiates femtosecond laser beam having the pulse width of about 100 to 150 femtoseconds, for example, as the femtosecond laser beam having the pulse width of a $10^{-13}$ second order, a half mirror 12 that branches femtosecond laser beam L, which has been emitted from the femtosecond laser 10, into the first femtosecond laser beam L1 and the second femtosecond laser beam L2, a first mirror 14 that reflects the first femtosecond laser beam L1 of one optical path that has been branched by the half mirror 12, an objective lens 16 for irradiating the first femtosecond laser beam as a lens that allows the first femtosecond laser beam L1, which has been reflected by the first mirror 14, to enter the inside of the sample 100 from the bottom surface 100a of the sample 100 and focus the light via a sample mounting table 22 (described later) and a high accuracy x-y-z-θ stage 24 (described later), the second mirror 18 that reflects the second femtosecond laser beam L2 of the other optical path that has been branched by the half mirror 12, an objective lens 20 for irradiating the second femtosecond laser beam as a lens that allows the second femtosecond laser beam L2, which has been reflected by the second mirror 18, to enter the inside of the sample 100 from the side surface 100b of the sample 100, which is orthogonal to the bottom surface 100a, and focus the light, a sample mounting table 22 that mounts the sample 100, the high accuracy x-y-z-θ stage 24 as the moving means for moving the sample 100 by moving the sample mounting table 22 in X-direction, Y-direction and Z-direction of a rectangular coordinate system and by rotating the table with the angle of rotation θ, a fluorescence monitor 26 that is mounted above the sample mounting table 22, an illumination unit 28 that emits illumination light on the sample 100 from the top surface 100c of the sample 100, a half mirror 30 that transmits the illumination light that has been emitted from the illumination unit 28, an objective lens 32 that focuses the illumination light, which has transmitted the half mirror 30, on the beam focus positions of the first femtosecond laser beam L1 and the second femtosecond laser beam L2, a CCD camera for observation 34 that receives reflected light from the beam focus positions of the first femtosecond laser beam L1 and the second femtosecond laser beam L2, which have been reflected by the half mirror 30, and an NC control system 36 that controls positions of the first mirror 14, the objective lens 16 for irradiating the first femtosecond laser beam, the second mirror 18, the objective lens 20 for irradiating the second femtosecond laser beam, the high accuracy x-y-z-θ stage 24, and the fluorescence monitor 26.

Therefore, the processing device for the inside of the transparent material is capable of arbitrarily setting the beam focus positions of the first femtosecond laser beam L1 and the second femtosecond laser beam L2 inside the sample 100 by control of NC control system 36.

Further, in the processing device for the inside of the transparent material, the optical axis of the first femtosecond laser beam L1, which is emitted from the objective lens 16 for irradiating the first femtosecond laser beam, allowed to enter the inside of the sample 100, and focused on the inside of the sample 100, and the optical axis of the second femtosecond laser beam L2, which is emitted from the objective lens 20 for irradiating the second femtosecond laser beam, allowed to enter the inside of the sample 100, and focused on the inside of the sample 100, are arranged such that the axes cross with the angle of approximately 90 degrees, and the beam focus position of the first femtosecond laser beam L1 inside the sample 100 and the beam focus position of the second femtosecond laser beam L2 inside sample 100 are arranged so as to be superposed on each other.

It is to be noted that the femtosecond laser 10 is mounted on a vibration isolating deck 38 and the other constituent elements described above other than the femtosecond laser 10 and the NC control system 36 are mounted on a vibration isolating deck 40.

In the foregoing construction, the femtosecond laser beam that is emitted by the oscillation of the femtosecond laser beam 10 is branched into two optical paths by the half mirror 12.

The first femtosecond laser beam L1 of one optical path of the branched optical paths is entered from the bottom surface 100a of the sample 100 via the first mirror 14 and the objective lens 16 for irradiating the first femtosecond laser beam, and focused on the inside of the sample 100. Further, the second femtosecond laser beam L2 of the other optical paths of the branched optical paths is entered from the side surface 100b of the sample 100 via the second mirror 18 and the objective lens 20 for irradiating the second femtosecond laser beam, and focused on the inside of the sample 100.

Herein, the irradiation of the first femtosecond laser beam L1 and the second femtosecond laser beam L2 of the two optical paths on the sample 100 is controlled by the femtosecond laser 10 and the NC control system 36 such that they match on the basis of space and time, and the first femtosecond laser beam L1 and the second femtosecond laser beam L2 of the two optical paths are superposed inside the transparent material 100 with the angle of approximately 90 degrees at the beam focus position inside the sample 100.

Then, in the processing device for the inside of the transparent material, in order to monitor that the irradiation of the first femtosecond laser beam L1 and the second femtosecond laser beam L2 of the two optical paths on the sample 100 matches on the basis of space and time, the fluorescence monitor 26 is used to observe fluorescence that is generated from the sample 100 due to the irradiation of femtosecond laser beam.

Specifically, the fluorescence monitor 26 is used to observe fluorescence that is generated from the sample 100 due to the irradiation of femtosecond laser beam, the NC control system 36 performs positional control of the first mirror 14, the objective lens 16 for irradiating the first femtosecond laser beam, the second mirror 18, the objective lens 20 for irradiating the second femtosecond laser beam, and the high accuracy x-y-z-θ stage 24 to bring fluorescence intensity to the maximum, and the femtosecond laser 10 controls the oscillation of femtosecond laser beam.

As described above, when the first femtosecond laser beam L1 and the second femtosecond laser beam L2 cross such that their optical axes have the angle of approximately 90 degrees and the beams are entered into the sample 100 so as to be superposed at the beam focus positions and inside the sample 100, the spatial intensity distribution at the superposed beam focus position has the intensity distribution of a substantially perfect circle.

Specifically, as shown in Fig. 3, the spatial intensity distribution M1 of the elliptical shape in the direction parallel to the advance direction of the beam at the beam focus position of the first femtosecond laser beam L1 and the spatial intensity distribution M2 of the elliptical shape in the direction parallel to the advance direction of the beam at the beam focus position of the second femtosecond laser beam L2 are superposed, and the center O of the spatial intensity distribution in the direction parallel to the beams of the first femtosecond laser beam L1 and the second femtosecond laser beam L2 at the beam focus position of the sample 100 becomes a substantially perfect circle.

Consequently, as the processed shape such as a modified shape and a worked shape inside the sample 100, a substantially perfect sphere, in other words, the shape whose cross-sectional shape in the direction parallel to the advance direction of femtosecond laser beam is a substantially perfect circle can be obtained.

It is to be noted that the roundness of the beam focus position where the first femtosecond laser beam L1 and the second femtosecond laser beam L2 are superposed depends on an angle at which the beam focus position of the first femtosecond laser beam L1 and the beam focus position of the second femtosecond laser beam L22 are superposed, in other words, an angle at which the optical axis of the first femtosecond laser beam L1 and the optical axis of the second femtosecond laser beam L2 cross. As shown in the above-described embodiment, the roundness reaches the maximum when the angle at which the first femtosecond laser beam L1 and the second femtosecond laser beam L2 cross is approximately 90 degrees, and the roundness reduces as the angle becomes more acute or more obtuse than 90 degrees.

Therefore, the angle at which the optical axis of the first femtosecond laser beam L1 and the optical axis of the second femtosecond laser beam L2 cross should be set based on the level of roundness required.

According to the calculation result of the inventors of this application, in the case where the objective lenses having the numerical aperture of 1/3 are used as the objective lens 16 for irradiating the first femtosecond laser beam and the objective lens 20 for irradiating the second femtosecond laser beam, for example, when the angle at which the first femtosecond laser beam L1 and the second femtosecond laser beam L2 cross is 60 degrees, the spatial intensity distribution in the direction parallel to the advance direction of the beam at the beam focus position where the beam focus position of the first femtosecond laser beam L1 and the beam focus position of the second femtosecond laser beam L2 are superposed should have the intensity distribution of a slightly lengthwise circular shape slightly extending in the advance direction of the beam as shown in Fig. 4(a).

On the other hand, according to the calculation result of the inventors of this application, in the case where the objective lenses having the numerical aperture of 1/3 are used as the objective lens 16 for irradiating the first femtosecond laser beam and the objective lens 20 for irradiating the second femtosecond laser beam, for example, when the angle at which the first femtosecond laser beam L1 and the second femtosecond laser beam L2 cross is 90 degrees, the spatial intensity distribution in the direction parallel to the advance direction of the beam at the beam focus position where the beam focus position of the first femtosecond laser beam L1 and the beam focus position of the second femtosecond laser beam L2 are superposed should have the intensity distribution of perfect circle with respect to the advance direction of the beam as shown in Fig. 4(b).

As described, when the angle at which the first femtosecond laser beam L1 and the second femtosecond laser beam L2 cross is 90 degrees, the intensity distribution of a substantially perfect circle is obtained at the center of the beam focus position where the first femtosecond laser beam L1 and the beam focus position of the second femtosecond laser beam L2 are superposed.

It is to be noted that the calculation method shown in "The beam focus calculation of Gaussian beam when using a lens having focal distance f" was used in calculating the spatial intensity distribution shown in Figs. 4(a) and (b).

Therefore, when the above-described processing device for the transparent material according to the present invention is used, a substantially perfect sphere, in other words, the shape whose cross-sectional shape in the direction parallel to the advance direction of femtosecond laser beam is a substantially perfect circle can be obtained as the processed shape such as a modified shape and a worked shape inside the sample 100.

Then, in situ observation of the above-described processing condition can be performed by the CCD camera for observation 34.

Meanwhile, the femtosecond laser performs the processing such as modification and working inside the sample 100 by multiphoton absorption as described above, and intensity of a threshold value for causing absorption exists in the multiphoton absorption by femtosecond laser.

Herein, the beam profile of the femtosecond laser is generally Gaussian-like. Therefore, when pulse energy is adjusted to make only the tip portion of beam exceed the threshold value, multiphoton absorption can be generated only at the tip portion of beam, which makes it possible to perform much finer processing such as modification and working inside the sample 100 than the beam diameter of the femtosecond laser.

For this reason, since the femtosecond laser beam can be easily focused into about a wavelength (fundamental wave is about 800nm, double wave is about 400nm), nano-processing of about 200nm can be performed. However, when the processing device for the transparent material according to the present invention is used, by adjusting the pulse energy to make only the beam focus position, where the beam focus position of the first femtosecond laser beam L1 and the beam focus position of the second femtosecond laser beam L2 are superposed, exceed the threshold value, a region where multiphoton absorption occur can be limited to a smaller area and nano-processing of 100nm can be realized.

Specifically, when the processing device for the transparent material according to the present invention is used, the photon density at the beam focus position, where the beam focus position of the first femtosecond laser beam L1 and the beam focus position of the second femtosecond laser beam L2 are superposed, becomes extremely large, and a working region can be rigorously controlled particularly when multiphoton absorption process is used. As a result, finer and more accurate working can be realized three-dimensionally.

It is to be noted that stereolithography and lithography are being attempted in the nano-processing by femtosecond laser, and higher resolution can be obtained when the processing device for the transparent material according to the present invention is used.

Incidentally, the above-described embodiment can be modified as follows shown in (1) to (6).

(1) In the above-described embodiment, description has been made for the cases where the angle at which the first femtosecond laser beam L1 and the second femtosecond laser beam L2 cross was 60 degrees and 90 degrees. However, it goes without saying that the invention is not limited to them, and the angle at which the first femtosecond laser beam L1 and the second femtosecond laser beam L2 cross should be set to an arbitrary value based on the roundness required at the beam focus position where the first femtosecond laser beam L1 and the second femtosecond laser beam L2 are superposed.

(2) In the above-described embodiment, the femtosecond laser beam that was oscillated by a single femtosecond laser 10 was branched into the first femtosecond laser beam L1 and the second femtosecond laser beam L2. However, it goes without saying that the invention is not limited to this, and the first femtosecond laser beam L1 and the second femtosecond laser beam L2 may be generated independently by using two femtosecond lasers.

(3) In the above-described embodiment, the beam focus positions of two femtosecond laser beams were superposed. However, it goes without saying that the invention is not limited to this, and the beam focus positions of a plurality of femtosecond laser beams of three or more may be superposed. In this case, an angle at which the plurality of femtosecond laser beams cross may be either equal or unequal. For example, assuming that angles at which three femtosecond laser beams cross be equal in the case of superposing the beam focus positions of the three femtosecond laser beams, the angles are 60 degrees.

(4) In the above-described embodiment, the fluorescence generated from the sample 100 due to the irradiation of femtosecond laser beam was observed using the fluorescence monitor 26, the NC control system 36 performed positional control of the first mirror 14, the objective lens 16 for irradiating the first femtosecond laser beam, the second mirror 18, the objective lens 20 for irradiating the second femtosecond laser beam, and the high accuracy x-y-z-θ stage 24 to bring fluorescence intensity to the maximum, and the femtosecond laser 10 controlled the oscillation of femtosecond laser beam. However, it goes without saying that the invention is not limited to this. For example, since it is known that odd harmonic of high-order is generated when two femtosecond laser beams are crossed and entered into a medium, the NC control system 36 may perform positional control of the first mirror 14, the objective lens 16 for irradiating the first femtosecond laser beam, the second mirror 18, the objective lens 20 for irradiating the second femtosecond laser beam, and the high accuracy x-y-z-θ stage 24 to bring the high harmonic (the easiest one is the third harmonic) to the maximum, and the femtosecond laser 10 may control the oscillation of femtosecond laser beam.

It is to be noted that the sample 100, which is installed on the high accuracy x-y-z-θ stage 24, must be scanned in order to perform three-dimensional processing of the inside of sample 100. However, when the sample 100 is moved, the beam focus position and the transfer time between the laser beams of the first femtosecond laser beam L1 and the second femtosecond laser beam L2 are misaligned due to the difference of refraction index between air and the sample 100. To correct this, the intensity of fluorescence is constantly monitored using the fluorescence monitor 26 or the intensity of the high harmonic is monitored as described above to apply feedback by computer control to bring the intensity to the maximum, and the NC control system 36 needs to perform positional control of the first mirror 14, the objective lens 16 for irradiating the first femtosecond laser beam, the second mirror 18, the objective lens 20 for irradiating the second femtosecond laser beam, and the high accuracy x-y-z-θ stage 24, and the femtosecond laser 10 needs to control the oscillation of femtosecond laser beam.

Since the above-described method is accurate but complicated, the following method can be also used as an easier method. Specifically, the misalignment of the beam focus position and the transfer time between the first femtosecond laser beam L1 and the second femtosecond laser beam L2 can be easily calculated if the refraction index of the sample 100 is known, the NC control system 36 may perform positional control of the first mirror 14, the objective lens 16 for irradiating the first femtosecond laser beam, the second mirror 18, the objective lens 20 for irradiating the second femtosecond laser beam, and the high accuracy x-y-z-θ stage 24, and the femtosecond laser 10 may control the oscillation of femtosecond laser beam via the computer control based on the moved amount of the high accuracy x-y-z-θ stage 24. Although this method is not as accurate as the above-described method, it is simple and practical.

(5) In the above-described embodiment, description has been made for the case of creating the micro-channel. However, it goes without saying that the invention is not limited to this, and the present invention can be also applied for the creation of other three-dimensional structure such as an optical waveguide and a micro-void.

(6) The above-described embodiment and the above-described modifications shown in (1) to (5) may be appropriately used in combination.

Industrial Applicability

Since the present invention is constructed as described above, it exerts superior effect that a processed shape of substantially perfect sphere, in other words, a cross-sectional shape in a direction parallel to the advance direction of femtosecond laser beam is a substantially perfect circle can be obtained as a processed shape such as a modified shape or a worked shape on a beam focus position, even if the femtosecond laser beam is focused on the inside of a transparent material using a condenser lens of a relatively small numerical aperture, by which the working distance of several mm or more can be secured.

**Claims**

1.  A method of processing the inside of a transparent material, comprising the steps of:

    allowing a plurality of femtosecond laser beams to severally enter lenses;
    focusing said plurality of femtosecond laser beams on the inside of a transparent material by said lenses such that each optical axis has a predetermined angle;
    superposing the beam focus positions of said plurality of femtosecond laser beams on the inside of said transparent material; and
    processing the inside of said transparent material by the operation of said plurality of femtosecond laser beams that are focused on said superposed beam focus position.

2.  A method of processing the inside of a transparent material, comprising the steps of:

    allowing the first femtosecond laser beam to enter the first lens to focus said first femtosecond laser beam on the inside of the transparent material by said first lens;
    allowing the second femtosecond laser beam to enter the second lens to focus said second femtosecond laser beam on the inside of the transparent material by said second lens such that the light has a predetermined angle with respect to said first femtosecond laser beam that is focused on the inside of said transparent material;

superposing the beam focus position of said first femtosecond laser beam ahd the beam focus position of said second femtosecond laser beam on the inside of said transparent material; and

processing the inside of said transparent material by the operation of said first femtosecond laser beam and said second femtosecond laser beam which are focused on said superposed beam focus position.

3. The method of processing the inside of a transparent material according to Claim 2, wherein

said predetermined angle is approximately 90 degrees.

4. A device of processing the inside of a transparent material, comprising:

a plurality of lenses that severally focus a plurality of femtosecond laser beams on the inside of a transparent material, wherein

the beam focus positions of said plurality of femtosecond laser beams are superposed on the inside of said transparent material with predetermined angles, and

the inside of said transparent material is processed by the operation of said plurality of femtosecond laser beams that are focused on said superposed beam focus position.

5. A device of processing the inside of a transparent material, comprising:

the first lens for focusing the first femtosecond laser beam on the inside of a transparent material and the second lens for focusing the second femtosecond laser beam on the inside of said transparent material, wherein

the beam focus position of said first femtosecond laser beam and the beam focus position of said second femtosecond laser beam are superposed on the inside of said transparent material with a predetermined angle, and

the inside of said transparent material is processed by the operation of said first femtosecond laser beam and said second femtosecond laser beam, which are focused on said superposed beam focus position.

6. The device of processing the inside of a transparent material according to Claim 5, said device comprising:

moving means for relatively moving the superposed beam focus positions of said first femtosecond laser beam and said second femtosecond laser beam which are focused on the inside of said transparent material, with respect to said transparent material.

7. The device of processing the inside of a transparent material according to any one of Claims 5 and 6, wherein

said predetermined angle is approximately 90 degrees.

# FIG. 1 (a)

# FIG. 1 (b)

# FIG. 2

# FIG. 3

# FIG. 4(a)

# FIG. 4 (b)

EP 1 514 635 A1

# INTERNATIONAL SEARCH REPORT

| International application No. |
|---|
| PCT/JP03/06040 |

**A. CLASSIFICATION OF SUBJECT MATTER**
Int.Cl$^7$ B23K26/40, C03C23/00

According to International Patent Classification (IPC) or to both national classification and IPC

**B. FIELDS SEARCHED**

Minimum documentation searched (classification system followed by classification symbols)
Int.Cl$^7$ B23K26/40, C03C23/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2003 |
| Kokai Jitsuyo Shinan Koho | 1971-2003 | Toroku Jitsuyo Shinan Koho | 1994-2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| E,X<br>E,A | EP 1251724 A2 (HITACHI, Ltd.),<br>23 October, 2002 (23.10.02),<br>Par. Nos. [0012] to [0016], [0019] to [0026];<br>Figs. 1, 3 to 7<br>& JP 2002-314218 A | 1-2,4-6<br>3,7 |
| A | US 5786560 A (PANASONIC THCHNOLOGIES, Inc.),<br>28 July, 1998 (28.07.98),<br>Full text; Fig. 4<br>(Family: none) | 1-7 |
| E,A | JP 2003-110206 A (Nitto Denko Corp.),<br>11 April, 2003 (11.04.03),<br>Claims; detailed explanation of the invention;<br>Par. Nos. [0070] to [0074]; Figs. 1 to 4<br>(Family: none) | 1-7 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>22 August, 2003 (22.08.03) | Date of mailing of the international search report<br>09 September, 2003 (09.09.03) |
|---|---|
| Name and mailing address of the ISA/<br>Japanese Patent Office | Authorized officer |
| Facsimile No. | Telephone No. |

Form PCT/ISA/210 (second sheet) (July 1998)

18

## INTERNATIONAL SEARCH REPORT

| International application No. |
| --- |
| PCT/JP03/06040 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | Kiyotaka MIURA, Kazuyuki HIRAO, "Femto-byo Laser Shosya ni yotu Glass Naibu eno Hikari Yuki Kozo Keisei", Dai 42 Kai Laser Netsukako Kenkyukai Ronbunsyu, 1997, pages 106 to 107, ISBN: 4-947684-15-1, '2. Hikari Yuki Kussetsuritsu oyobi Kodo Haro no Kakikomi Hoho' | 1-7 |
| T | CENG et al., 3D microstructuring inside Forturan glass by femtosecond laser, RIKEN Review, January 2003, No.50, pages 101 to 106, ISSN 0919-3405 | 1-7 |

Form PCT/ISA/210 (continuation of second sheet) (July 1998)